# FASCICULE DE BREVET EUROPEEN

(11) **EP 3 944 204 B1**
(45) Date de publication et mention de la délivrance du brevet: **27.11.2024**
(21) Numéro de dépôt: 21186532.4
(22) Date de dépôt: 19.07.2021
(51) Int. Cl.: G07C 9/25, G07C 9/27, G06F 1/16, G06Q 50/26

(54) **INSTALLATION D'ACQUISITION ET DE CONTROLE DE DONNEES DOCUMENTAIRES A BORD D'UN VEHICULE**
ANLAGE ZUR ERFASSUNG UND KONTROLLE VON DOKUMENTATIONSDATEN AN BORD EINES FAHRZEUGS
INSTALLATION FOR ACQUIRING AND CONTROLLING DOCUMENTARY DATA ON BOARD A VEHICLE

(30) Priorité: 23.07.2020 FR 2007776
(43) Date de publication de la demande: 26.01.2022
(60) Demande divisionnaire: 24197723.0
(73) Titulaire: Getlink S.E., 75008 Paris (FR)
(72) Inventeur: JUIN, Philippe, 75012 PARIS (FR); TETU, Nicolas, 62280 SAINT MARTIN BOULOGNE (FR)
(74) Mandataire: Cabinet Beau de Loménie

(56) Documents cités:
- FR-A1- 2 988 871
- US-A1- 2012 075 442
- US-A1- 2017 103 265

## Description

### Domaine technique

La présente invention concerne le domaine des installations de contrôle des données documentaires à bord d'un véhicule, notamment lors d'un passage de frontière.

### Technique antérieure

Le but d'une telle installation est de collecter et vérifier les documents d'identité du ou des passagers d'un véhicule souhaitant franchir une frontière entre deux pays.

Actuellement, cette opération est réalisée physiquement par des agents de contrôle aux frontières, qui sont chargé de réaliser la vérification des pièces d'identité, et d'autoriser ou interdire le passage de la frontière.

Les agents procèdent à un contrôle d'identité du ou des passagers du véhicule sur la base des pièces d'identité fournies par le ou les passagers. Ils réalisent également un contrôle du véhicule sur la base des documents d'identité du véhicule, telle que la carte grise.

Lors de cette opération, un agent doit être présent physiquement pour consulter les différents documents présentés par le ou les passagers, interroger les bases de données et réaliser les procédures de contrôle appropriées.

Lorsque le véhicule est un poids-lourd transportant de la marchandise, l'agent doit également vérifier les documents administratifs afférents à la marchandise transportée.

Ces démarches sont chronophages et mobilisent des ressources humaines. En outre, le protocole actuel impose à l'agent d'être en contact avec les passagers du véhicule, ce qui est problématique en période de pandémie virale.

Le document US 2017/103265 décrit une installation de contrôle de passeports qui comporte un kiosque muni d'un écran et de lecteurs de données. Cette installation présente plusieurs inconvénients. Les usagers doivent garer leurs véhicules puis se diriger vers le kiosque. Ils doivent ensuite faire la queue avant de pouvoir effectuer les démarches demandées par les autorités. Non seulement cette démarche reste chronophage, mais impose en outre à l'usager de s'éloigner de son véhicule, qui reste alors sans surveillance. Ceci est particulièrement problématique si le véhicule est un poids-lourd contenant de la marchandise de valeurs.

### Exposé de l'invention

Un but de l'invention est de proposer une installation d'acquisition et de contrôle de données documentaires à bord d'un véhicule, permettant de faciliter et accélérer les opérations de contrôle à la frontière.

L'invention trouvera notamment son application au sein de terminaux ferroviaires, routiers ou en encore portuaires.

A cet effet, l'invention porte donc sur une installation d'acquisition et de contrôle de données documentaires à bord d'un véhicule selon la revendication 1, ladite installation comprenant :
un dispositif de signalisation d'autorisation de passage du véhicule ;
un dispositif d'acquisition et de communication, qui comprend au moins :
   une tablette comportant au moins un écran et un module de lecture de données documentaires,
   un module de transmission de données connecté au moins au module de lecture pour transmettre des données à un serveur distant,
   un module de réception de données en provenance du serveur distant,
   un module de commande pour commander l'actionnement du dispositif de signalisation d'autorisation de passage du véhicule ; et
une borne fixée au sol et comportant au moins un logement pour recevoir la tablette.

Grâce à l'invention, au moins une partie des opérations de contrôle peuvent effectuées sans la présence d'un agent de contrôle aux frontières, ce dernier pouvant être affecté à d'autres tâches.

Un exemple de séquence mise en oeuvre grâce à l'installation selon l'invention est le suivant. Le véhicule s'arrête à côté de la borne, devant le dispositif de signalisation d'autorisation de passage du véhicule qui signale au conducteur qu'il doit immobiliser son véhicule. Le dispositif de signalisation d'autorisation de passage peut comprendre une barrière basculante et/ou un feu de signalisation.

Le logement présente une entrée ou ouverture qui débouche à l'extérieur de la borne, de préférence en vis-à-vis de la fenêtre du véhicule. L'entrée est ménagée de préférence sur une paroi latérale de la borne, de préférence une paroi verticale. La direction d'engagement de la tablette dans le logement est donc sensiblement horizontale. La tablette est initialement disposée dans le logement. La tablette est prévue pour être rangée dans le logement lorsqu'elle n'est pas utilisée.

Le conducteur du véhicule, ou un passager, saisit alors la tablette qui est rangée dans le logement de la borne, et présente un document afin qu'il soit lu par le module de lecture. Cette étape de lecture est connue par ailleurs. Elle met généralement en oeuvre un protocole MRZ.

Les données documentaires du document sont alors transmises par le module de transmission de données au service distant, qui est par exemple le serveur de l'autorité en charge du contrôle de passage de la frontière. Un tel serveur est connu par ailleurs. Il comprend une base de données, contenant notamment les données relatives aux personnes et véhicules qui sont entrées dans le pays.

Le serveur est relié au module de transmission par un réseau informatique, par exemple via le réseau Internet.

Le serveur distant procède, à l'aide de données contenues dans la base de données, aux opérations de traitement automatisées des données lues par le module de lecture. Pour ce faire, le serveur distant comporte de façon connue un ordinateur configuré pour réaliser une étape de comparaison des données reçues avec celles contenues dans la base de données.

Le serveur distant transmet en retour des données au dispositif d'acquisition et de communication, qui les reçoit grâce au module de réception. Le serveur distant transmet notamment l'information selon laquelle le véhicule est autorisé ou pas à franchir la frontière. Dans l'affirmative, le module de commande actionne le dispositif de signalisation d'autorisation de passage du véhicule, qui peut alors franchir la frontière et/ou se rendre au poste de contrôle suivant. Le module de commande est donc configuré pour commander l'actionnement du dispositif de signalisation d'autorisation de passage du véhicule à partir des données reçues par le module de réception. Sans sortir du cadre de la présente invention, les modules de transmission et de réception peuvent constituer un seul et unique module de communication réalisant les deux fonctions.

Avantageusement, la tablette est reliée à la borne par au moins un élément longiligne.

Cet élément longiligne, qui comprend par exemple un ou plusieurs câbles, s'étend depuis la borne, et plus préférentiellement depuis l'intérieur du logement.

La longueur de l'élément longiligne est suffisante pour que la tablette puisse être déplacée à l'intérieur du véhicule entre les différents passagers.

Avantageusement, l'élément longiligne coopère avec un enrouleur, de façon à ne pas entraver l'engagement de la tablette dans le logement. Cet enrouleur est préférentiellement disposé dans la borne, de préférence de façon adjacente au logement.

Selon un mode de réalisation, l'élément longiligne comprend un câble de transfert de données relié au module de transmission de données.

On comprend donc que les données lues par le module de lecture sont transmises au serveur distant via le câble de transfert de données, qui est par exemple du type Ethernet.

Préférentiellement, l'élément longiligne comprend un câble antivol. Le câble antivol est par exemple constitué par un câble métallique. Sans sortir du cadre de l'invention, l'élément longiligne peut comporter un unique câble antivol ou bien un ensemble comprenant un câble antivol et un câble de transfert de données.

Selon un mode de réalisation, l'élément longiligne comprend un câble électrique pour alimenter la tablette.

Là-encore, l'élément longiligne peut être constitué uniquement du câble électrique ou bien d'une combinaison d'un ou plusieurs éléments pris parmi le câble électrique, le câble antivol et le câble de transfert de données.

Selon un autre mode de réalisation, la borne comporte en outre un module de recharge, disposé dans le logement, pour recharger une batterie de la tablette.

Ce module de recharge peut être du type à induction, ou bien comporter un connecteur conformé pour coopérer avec un connecteur complémentaire de la tablette.

Avantageusement, la borne comporte en outre un volet mobile pour obturer l'entrée du logement. Un intérêt est de protéger la tablette lorsqu'elle n'est pas utilisée. Le volet mobile est préférentiellement monté pivotant par rapport au châssis de la borne. De préférence, la borne comporte en outre dispositif de détection du véhicule qui est configuré pour commander l'ouverture du volet lorsqu'un véhicule est détecté à proximité de la borne.

Selon l'invention, la borne comporte en outre un capteur de présence pour détecter la présence de la tablette dans le logement.

Un intérêt est de pouvoir s'assurer que la tablette a bien été replacée dans le logement avant d'autoriser le véhicule à avancer.

Selon l'invention, la borne comporte en outre un ordinateur agencé pour piloter l'actionnement du dispositif de signalisation d'autorisation du passage du véhicule, ledit ordinateur communiquant avec le module de commande. On comprend que le module de commande donne instruction à l'ordinateur d'actionner le dispositif de signalisation d'autorisation du passage du véhicule. Selon une variante, le module de commande peut piloter directement le dispositif de signalisation d'autorisation du passage du véhicule.

Selon l'invention, le capteur de présence est relié à l'ordinateur, et ledit ordinateur est configuré pour interdire l'actionnement du dispositif de signalisation d'autorisation du passage du véhicule si la présence de la tablette dans le logement n'est pas détectée par le capteur de présence.

Selon un aspect avantageux de l'invention, l'installation comporte en outre un dispositif de désinfection de la tablette. La tablette est périodiquement désinfectée, de préférence après chaque passage de véhicule, afin d'éviter une transmission de bactéries ou virus entre les conducteurs des véhicules.

De préférence, le dispositif de désinfection est disposé dans la borne. Alternativement, le dispositif de désinfection pourrait être disposé sur une paroi extérieure de la borne, ou à proximité de la borne, la tablette étant désinfectée par le passager. Encore de préférence, le dispositif de désinfection est disposé dans le logement ou à côté du logement.

De façon préférentielle, le dispositif de désinfection comporte au moins une lampe UV (Ultra-Violet), de préférence de type cathode froide.

Une telle lampe UV, connue par ailleurs, permet d'éliminer les bactéries et virus susceptibles de se trouver sur la tablette ou dans le logement.

De préférence, la lampe UV est disposée dans le logement ou de façon adjacente au logement. Selon un mode de réalisation, la lampe UV comporte au moins deux éléments, de préférence tubulaires, disposés de part et d'autre de la tablette lorsqu'elle se trouve dans le logement.

De préférence, la borne comporte un témoin lumineux indiquant que la désinfection de la tablette est en cours.

Encore de préférence, le dispositif de désinfection est relié à un module de contrôle qui est configuré pour actionner le volet mobile afin d'obturer le logement pendant le processus de désinfection.

De préférence, le logement comporte en outre une cage, de préférence métallique. Les lampes UV sont préférentiellement disposées autour de ladite cage.

Avantageusement, le module de lecture de données documentaires comporte un ou plusieurs éléments pris parmi un lecteur RFID, un lecteur de code-barres et un lecteur MRZ. MRZ signifie « Machine Readable Zone » en anglais. Ce type de lecteur est connu par ailleurs.

Ces lecteurs, connus par ailleurs, permettent notamment de lire les données d'une pièce d'identité, tel un passeport.

L'écran de la tablette permet notamment de lire des consignes d'utilisation. Il permet aussi à l'utilisateur de choisir la langue.

Selon un autre aspect avantageux, la tablette comporte en outre au moins un lecteur biométrique. Elle comporte de préférence un lecteur biométrique d'empreintes digitales, ainsi qu'un lecteur biométrique facial. De préférence, la tablette comprend également une caméra et/ou appareil photo, et éventuellement un dispositif d'éclairage de type flash. Le lecteur biométrique facial utilise préférentiellement la caméra.

Lorsqu'ils sont présents, le ou les lecteurs biométriques, ainsi que la caméra sont reliés à un module de transmission de données pour transmettre les données acquises au serveur distant.

Pour faciliter sa manipulation, la tablette comporte en outre au moins une poignée de préhension, de préférence deux poignées de préhension situées sur les bords latéraux opposés de la tablette. Le lecteur MRZ, lorsqu'il est présent, est de préférence situé sur un bord supérieur de la tablette, entre les deux poignées de préhension.

Lorsque la tablette est disposée dans le logement, l'une des poignées de préhension est accessible par l'utilisateur via l'entrée du logement.

Selon un mode de réalisation préférentiel, le module de transmission de données est logé dans la tablette. Sans sortir du cadre de la présente invention, le module de transmission de données pourrait être disposé dans la borne.

Selon un autre mode de réalisation, la tablette comporte en outre un module de communication sans fil. Selon une variante, la tablette est dépourvue de moyen de liaison filaire à la borne. Autrement dit, la tablette n'est pas reliée à la borne à l'aide d'un élément longiligne.

Avantageusement, le module de transmission et le module de réception sont disposés dans la tablette. De préférence, le module de commande est également intégré dans la tablette.

Avantageusement, le dispositif de signalisation d'autorisation de passage comporte une barrière, tandis que le module de commande est configuré pour commander l'ouverture de la barrière.

La barrière s'étend préférentiellement au travers d'une voie, tandis que la borne est disposée au bord de la voie.

Comme exposé précédemment, l'installation selon l'invention peut être mis en oeuvre dans un terminal ferroviaire, routier ou bien encore portuaire.

Selon un autre mode de réalisation, la borne comporte plusieurs logements qui sont disposés à différentes hauteurs, chaque logement recevant une tablette. Un intérêt est que la même borne peut être utilisée pour séquencer le passage de différents types de véhicules, tels que par exemple une camionnette ou encore un poids-lourd.

Selon un mode de réalisation, la tablette comporte au moins une poignée de préhension, un écran, une caméra, au moins un module de lecture de données documentaires, et des moyens de transmission de données connectés à la caméra et au lecteur de données.

Avantageusement, la tablette comprend un corps et deux poignées de préhension disposées sur des bords latéraux opposés du corps.

De préférence, le module de lecture de données documentaires comprend un lecteur MRZ situé sur un bord supérieur du corps de la tablette, entre les deux poignées de préhension.

Selon un mode de réalisation, la borne comprend :
au moins un logement pour recevoir une tablette ayant un écran et un module de lecture de données documentaires, le logement ayant une entrée ; et
un capteur de présence de la tablette dans le logement.

On comprend que la tablette est insérée dans le logement ou sortie via l'entrée. De préférence, la borne comporte un logement supérieur et un logement inférieur, chacun étant destiné à recevoir une tablette. L'entrée est ménagée sur une paroi latérale, de préférence verticale, de la borne.

Avantageusement, la borne comprend en outre un dispositif de désinfection pour désinfecter le volume intérieur du logement qui reçoit la tablette, ce qui permet de désinfecter la tablette lorsqu'elle est rangée dans le logement. Le dispositif de désinfection comporte de préférence au moins une lampe UV, de préférence un tube à cathode froide. Le logement inclut également une cage, de préférence métallique, à laquelle est fixée la lampe, la cage communiquant avec l'entrée et étant conformée pour recevoir la tablette.

Avantageusement, la borne comprend en outre un volet mobile pour obturer l'entrée du logement. Le volet mobile est déplacé à l'aide d'un organe moteur. De préférence, mais non exclusivement, le volet mobile est monté pivotant autour d'un axe, de préférence vertical.

De préférence, la borne comporte en outre un ordinateur pour piloter l'actionnement d'un dispositif de signalisation d'autorisation de passage, telle une barrière ou un feu de signalisation. De préférence, l'ordinateur communique avec le capteur de présence, de sorte que l'actionnement du dispositif de signalisation d'autorisation de passage n'est pas autorisé si la présence de la tablette dans le logement n'est pas détectée par le capteur de présence.

### Brève description des dessins

L'invention sera mieux comprise à la lecture de la description qui suit de modes de réalisation de l'invention donnés à titre d'exemples non limitatifs, en référence aux dessins annexés, sur lesquels :
[Fig.**1**] La figure **1** illustre de façon schématique une installation d'acquisition et de contrôle de données documentaires selon un exemple de réalisation de l'invention ;
[Fig.**2**] La figure **2** est une vue de dessus d'une partie d'un terminal comportant une installation selon un exemple de réalisation de l'invention ;
[Fig.**3**] La figure **3** illustre de façon schématique une installation d'acquisition et de contrôle de données documentaires selon un autre exemple de réalisation de l'invention ;
[Fig.**4**] La figure **4** illustre une borne et la tablette d'une installation selon un exemple de réalisation de l'invention ;
[Fig.**5**] La figure **5** est une vue de détail de la borne de la figure **4****,** montrant le logement et l'enrouleur ;
[Fig.**6**] La figure **6** illustre un autre mode de réalisation de la borne ;
[Fig.**7**] La figure **7** est une vue de détail du logement et du volet mobile de la borne de la figure **6****;**
[Fig**.8**] La figure **8** est une vue de détail du logement de la figure **7****;**
[Fig.**9**] La figure **9** illustre le volet mobile de la figure **7** en position fermée ;
[Fig.**10**] La figure **10** illustre le volet mobile de la figure **7** en position ouverte ;
[Fig.**11**] La figure **11** illustre un premier mode de réalisation de la tablette ; et
[Fig.**12**] La figure **12** illustre un deuxième mode de réalisation de la tablette.

### Description détaillée

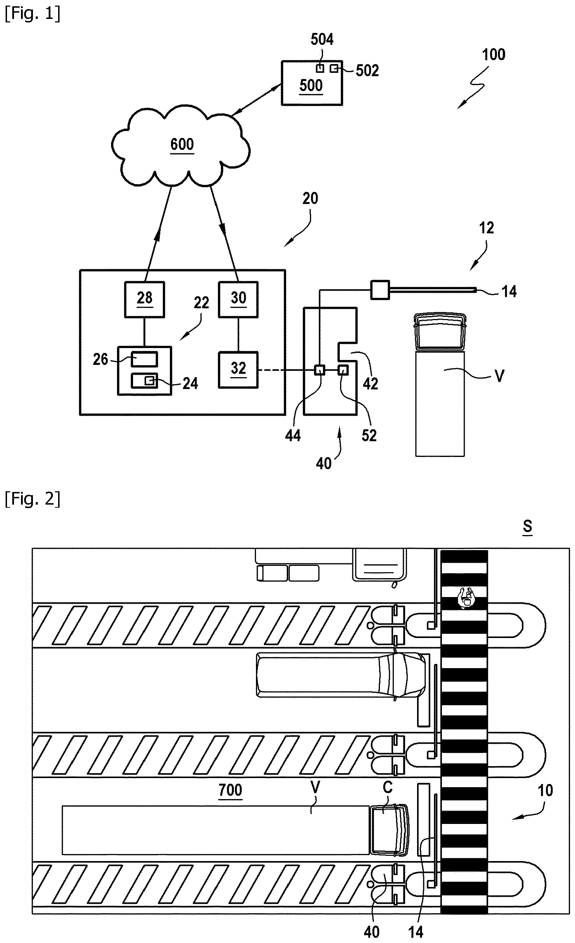

Sur la figure **1** est illustrée de façon schématique une installation **10** d'acquisition de contrôle de données documentaires à bord d'un véhicule **V.**

L'installation **10** comporte un dispositif **12** de signalisation d'autorisation de passage de véhicule **V.** Dans cet exemple, le dispositif **12** de signalisation de passage comprend une barrière **14.** La barrière **14** s'étend en travers de la voie sur laquelle est engagé le véhicule **V.** Sans sortir du cadre de la présente invention, le dispositif de signalisation d'autorisation de passage du véhicule pourrait être constitué par un feu de signalisation, ou par tout autre dispositif de signalisation permettant de signaler au conducteur du véhicule s'il doit s'arrêter devant ledit dispositif de signalisation, ou bien s'il peut le franchir.

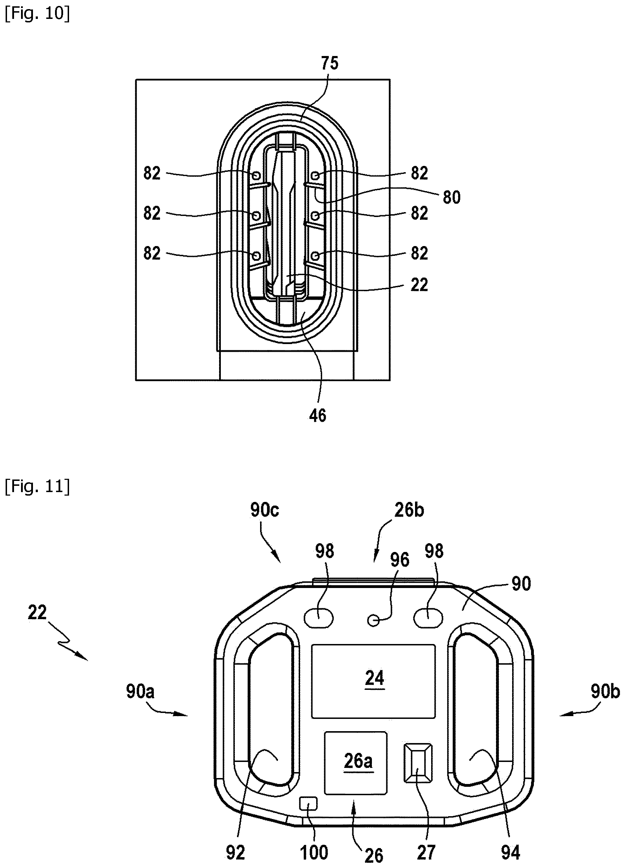

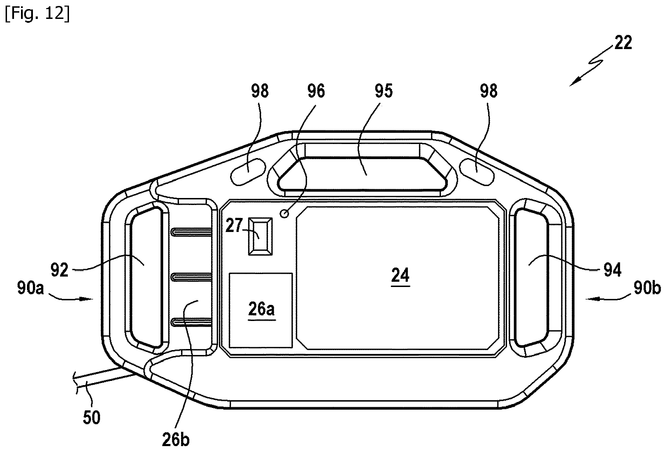

L'installation **10** comporte par ailleurs un dispositif **20** d'acquisition et de communication qui comprend une tablette **22** qui comporte au moins un écran **24** et un module de lecture d'informations documentaires **26.** La tablette, illustrée aux figures **11** et **12****,** sera décrite plus en détails ci-après.

Le dispositif d'acquisition de communication **20** comporte par ailleurs un module de transmission de données **28** qui est connecté au moins au module de lecture **26** pour transmettre des données à un serveur distant **500.** Dans cet exemple, le module de transmission de données **28** transmet les données via un réseau informatique, par exemple un réseau Internet ou Ethernet **600** illustré à la figure **1****.** Le serveur distant **500,** qui appartient généralement à l'autorité en charge du contrôle de passage de la frontière, comporte généralement une base de données contenant des données personnelles relatives aux personnes qui sont entrées dans le pays.

Le serveur distant **500** comporte également un module de traitement **504** pour effectuer une étape de comparaison entre les données reçues par le serveur distant et les données contenues dans la base de données **502.** Le serveur distant **500** est donc configuré pour prendre une décision suite à une demande de passage de frontière qui lui est transmise par l'installation d'acquisition et de contrôle selon l'invention. Cette décision, à savoir le plus souvent une autorisation ou une interdiction de passage, est ensuite transmise à l'installation.

A cet effet, le dispositif d'acquisition et de communication **20** comporte en outre un module de réception de données **30** configuré pour recevoir des données en provenance du serveur distant **500.**

A l'aide de la figure **1****,** on comprend que le module de réception de données **30** est également relié au serveur distant via le réseau informatique **600.** De préférence, le module de transmission et le module de réception constituent un module de communication entre le dispositif d'acquisition et de communication et le serveur distant.

Le dispositif d'acquisition et de communication **20** comporte en outre un module de commande **32** pour commander l'actionnement du dispositif **12** d'autorisation de signalisation de passage du véhicule.

L'installation **10** comporte en outre une borne **40** qui est fixée au sol S et qui comprend au moins un logement **42** pour recevoir la tablette **22.**

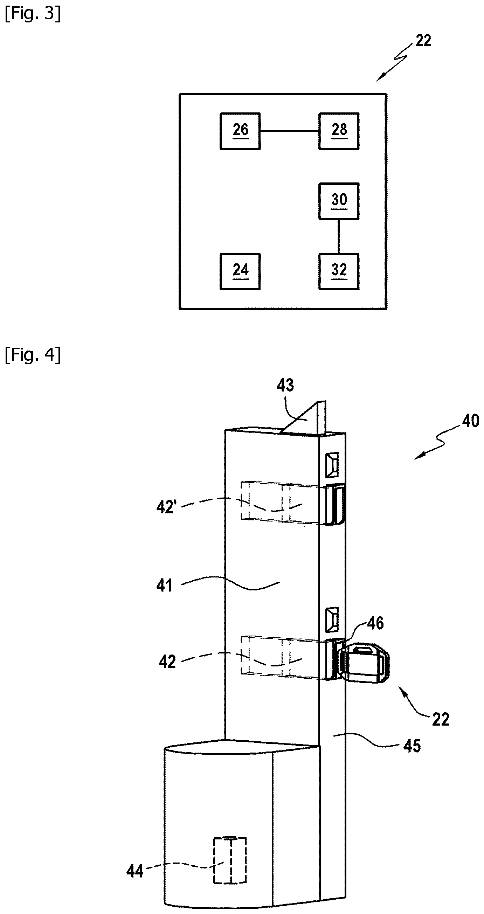

Sur la figure **2****,** on a illustré une partie d'un terminal, par exemple un terminal ferroviaire disposé à proximité de la frontière entre deux pays. Dans l'exemple de la figure **3****,** on constate que le véhicule **V,** en l'espère un poids-lourd, est engagé sur une voie de circulation **700** qui est fermée par la barrière **14.** Lorsque le véhicule **V** est arrêté devant la barrière **14,** la cabine **C** du véhicule **V** se trouve à côté de la borne **40.** Le passager, non illustré ici, peut alors saisir la tablette **22** disposée dans le logement **42** de la borne pour procéder à l'étape d'acquisition. Selon un mode de mise en oeuvre préférentiel, chacun des passagers présente sa pièce d'identité au module de lecture **26** de la tablette **22.** Comme il sera explicité ci-dessous, d'autres acquisitions de données, par exemple des données biométriques, peuvent être réalisées par la tablette.

Les données lues par le module de lecture **26** sont alors envoyées au serveur distant **500** grâce au module de transmission **28.** Le serveur distant **500** réalise une étape de contrôle des informations documentaires qui lui sont transmises par rapport aux données contenues dans la base de données **502,** à la suite de quoi le serveur distant **500** transmet au dispositif d'acquisition et de communication, via le module de réception **30,** l'autorisation ou l'interdiction de franchissement de la frontière. En cas d'interdiction de franchissement, la barrière **14** reste fermée. En cas d'autorisation, la barrière **94** s'ouvre sous réserve que, comme cela précisé ci-dessous, la tablette **22** ait été replacée dans le logement **42.**

Comme illustré sur la figure **10****,** un terminal peut comporter plusieurs installations **10** conformes à la présente invention.

L'ouverture de la barrière **14** est commandée par le module de commande **32.** Dans le mode de réalisation dans lequel le module de commande **32** est inclus dans la tablette **22,** la borne **40** comporte un ordinateur **44** qui est configuré pour piloter l'actionnement de la barrière **44.** Cet ordinateur **44** est lui-même connecté au module de commande **32,** par une liaison filaire ou sans fil.

Selon une variante préférentielle mais non exclusive, le module de transmission de données **28** et le module de réception de données **30** sont inclus dans la tablette **22.**

En variante, tout ou partie des modules de transmission, modules de réception, modules de commande pourra être intégré dans la borne.

Sur la figure **4****,** on a illustré un premier mode de réalisation de la borne **40** selon l'invention.

La borne **40** comporte un châssis **41** qui s'étend généralement de façon verticale. Dans cet exemple de réalisation, la borne **40** comporte deux logements, à savoir un logement inférieur **42** et un logement supérieur **42'.** Le conducteur du véhicule saisit la tablette dans le logement **42** ou **42'** qui est le plus facilement accessible pour lui. On constate que le logement **42** débouche à l'extérieur du châssis **41** via une entrée **46** par laquelle la tablette **22** est introduite dans le logement **42.** On comprend que le logement **42** débouche dans une paroi verticale **45** du châssis **41.** La direction d'engagement de la tablette **22** dans le logement **42** est donc sensiblement horizontale.

La borne **40** comporte en outre un témoin lumineux **43** permettant d'informer le conducteur sur l'état de fonctionnement de la borne.

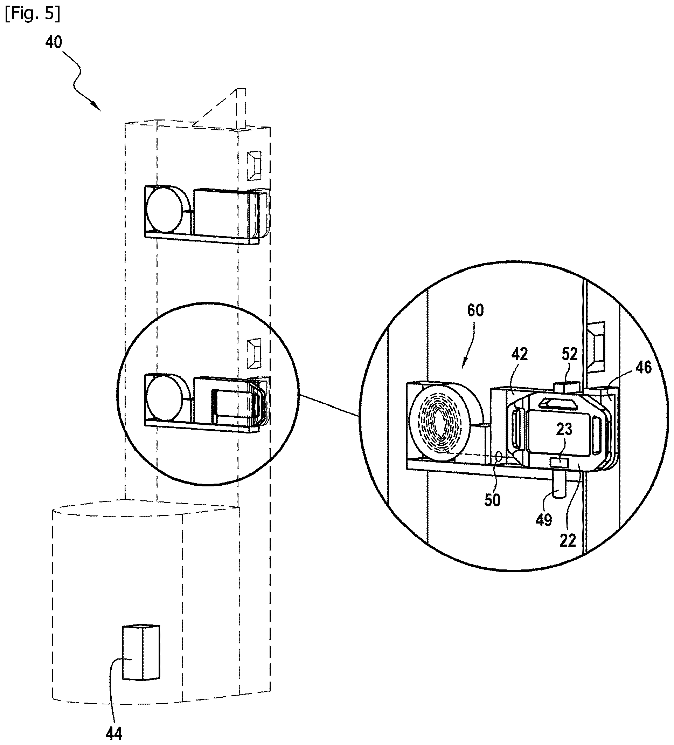

Selon un aspect avantageux de l'invention, la tablette **22** est reliée à la borne **40** par au moins un élément longiligne **50.** Cet élément longiligne **50** coopère, dans cet exemple, avec un enrouleur **60** qui est disposé de préférence de façon adjacente au logement **42,** encore de préférence derrière le logement **42,** comme illustré en figure **5****.** La longueur de l'élément longiligne est dimensionnée de façon à permettre la circulation de la tablette **22** à l'intérieur du poste de conduite du véhicule V, entre les passagers. L'enrouleur **60** comporte un moyen de rappel qui a pour effet d'enrouler l'élément longiligne sur lui-même de façon que, lorsque la tablette **22** se trouve dans le logement **42,** le logement longiligne se trouve dans l'enrouleur **60.** L'enrouleur permet également d'éviter que la tablette chute au sol. L'élément longiligne **50** peut comprendre un câble de transfert de données qui est relié au moins au module de transmission de données **28.** L'élément longiligne **60** peut également comprendre un câble antivol, par exemple un câble métallique, empêchant de dérober la tablette **22.**

L'élément longiligne **60** peut également comprendre un câble électrique pour alimenter la tablette.

Selon une autre variante, la borne **40** comporte un module de recharge **49** qui est disposé dans le logement **42,** par exemple en-dessous comme illustré dans l'exemple de la figure **5****,** pour recharger une batterie **23** de la tablette **22.** La connexion entre la batterie et le module de recharge peut s'effectuer par coopération entre deux connecteurs électriques, ou par induction, ces modes de recharge étant connus par ailleurs.

Par ailleurs, la borne **40** comporte en outre un capteur de présence **52** pour détecter la présence de la tablette dans le logement **42.**

Comme expliqué précédemment, la borne comporte en outre un ordinateur **44,** qui est agencé pour piloter l'actionnement du dispositif de signalisation d'autorisation du passage du véhicule **V,** l'ordinateur communiquant avec le module de commande **32** précédemment décrit. Par ailleurs, le capteur de présence **52** est relié à l'ordinateur **44.** L'ordinateur est quant à lui configuré pour interdire l'actionnement du dispositif de signalisation d'autorisation du passage de véhicule si la présence de la tablette **22** dans le logement **42** n'est pas détectée par le capteur de présence **52.**

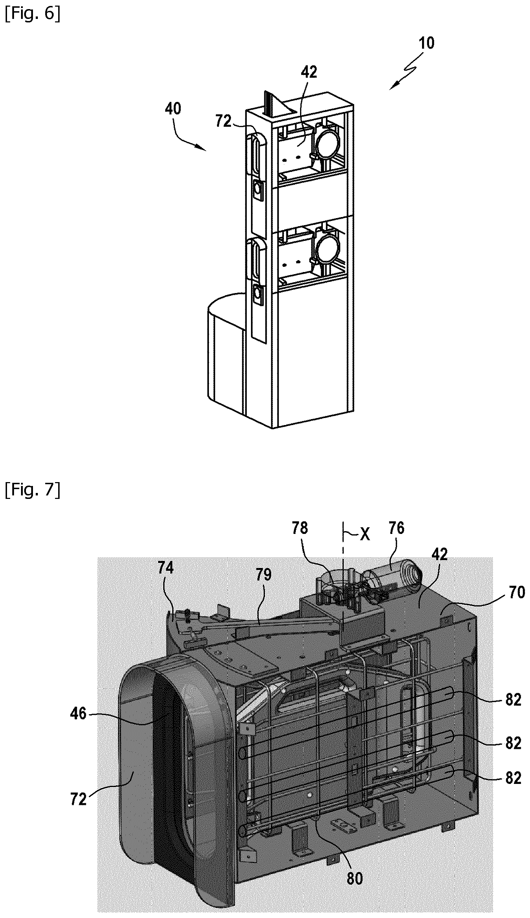

Sur la figure **6****,** on a illustré un autre mode de réalisation d'une installation **10** selon l'invention. L'installation selon le deuxième mode de réalisation diffère du premier mode de réalisation essentiellement dans la structure de la borne **40.**

Dans le deuxième mode de réalisation, l'installation **10** comporte en outre un dispositif de désinfection **70** de la tablette **22.** Ce dispositif de désinfection **70** a pour fonction de désinfecter la tablette après chaque utilisation. Dans cet exemple, le dispositif de désinfection **70** est disposé dans la borne **40.** Aussi, la tablette **22** est désinfectée après que l'utilisateur a remis la tablette **22** dans la borne **40,** et plus précisément dans le logement **42.** Autrement dit, grâce à l'invention, la tablette est désinfectée entre chaque véhicule.

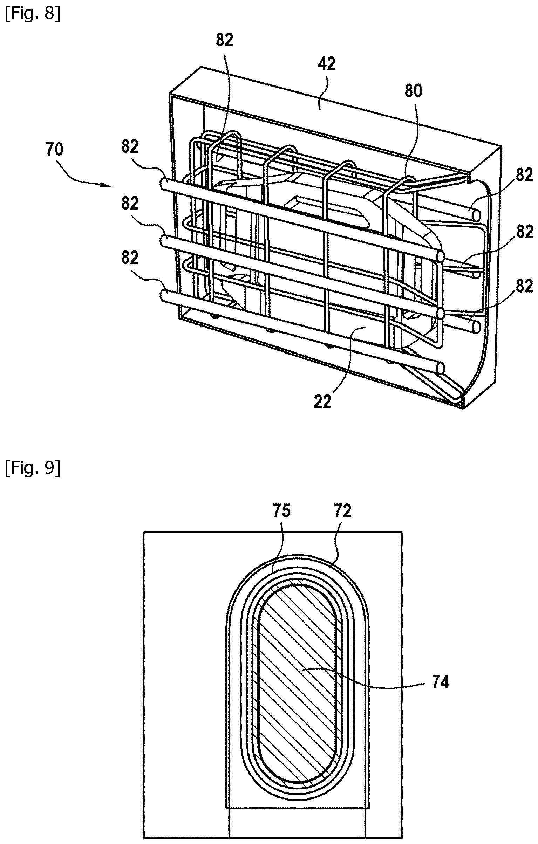

Sur les figures **7** et **8****,** on a décrit plus en détails le logement **42** de la borne **40** de l'installation **10** selon son deuxième mode de réalisation.

Le logement **42** se présente ici sous la forme d'un boitier **70** qui est intégré dans la borne et qui débouche hors de celle-ci via l'entrée **46.** Comme on le constate sur la figure **7****,** il est également prévu une casquette **72** qui fait saillie depuis le châssis de la borne et qui entoure les bords latéraux et supérieurs de l'entrée **46.**

La borne **40** comporte en outre un volet mobile **74** pour obturer le logement, et plus précisément l'entrée **46** du logement **42.**

Comme on le constate sur la figure **7****,** le volet mobile **74** est monté pivotant par rapport au boîtier **70** autour d'un axe de rotation **X** qui est, dans cet exemple, sensiblement vertical.

La borne comporte un moteur électrique **76** et un système d'engrenage **78** relié à un bras **79** liant le système d'engrenage **78** et le volet mobile **74.** Sur la figure **9****,** on a illustré le volet mobile **74** dans sa position fermée, dans laquelle il obture l'entrée **46** du logement **42.** Sur la figure **10****,** on a illustré le volet mobile **74** dans sa position ouverte, dans laquelle le conducteur du véhicule peut saisir la tablette **22,** ou bien la remettre dans son logement.

Dans cet exemple, la borne **40** comporte en outre un éclairage **75** entourant l'entrée **46,** cet éclairage **75** présentant différentes couleurs selon l'état de fonctionnement du dispositif de désinfection.

A l'aide de la figure **8****,** on va maintenant décrire plus en détails le dispositif de désinfection **70.** Le logement **42** comporte une cage, de préférence métallique qui constitue un fourreau dans lequel est insérée la tablette **22.** Dans cet exemple, le dispositif de désinfection **70** comporte des lampes UV **92** qui sont disposées à l'extérieur de la cage **80** de manière à entourer la tablette **22** lorsqu'elle est présente dans la cage. Les lampes UV sont disposées dans le logement.

Dans cet exemple, les lampes UV sont de type froides, et sont constituées par des tubes, par exemple de type Stanley à cathode froide.

A l'aide des figures **11** et **12****,** on va maintenant décrire deux modes de réalisation de la tablette selon l'invention.

Sur la figure **11****,** on a illustré un premier mode de réalisation de la tablette **22.** La tablette **22** comporte un corps **90,** qui est muni de deux poignées de préhension latérales **92, 94.** Le corps **90** se présente sous la forme d'une coque rigide, les poignées de préhension **92, 94** sont disposées latéralement de part et d'autre de l'écran **24** et du module de lecture **26.** Dans cet exemple, le module de lecture **26** comporte un lecteur RFID **26**a qui est disposé entre les deux poignées de préhension **92, 94,** en-dessous de l'écran **24.** Le module de lecture **26** comporte en outre un lecteur MRZ **26**b qui est disposé en partie supérieure du corps **90** de la tablette **22.**

La tablette **22** comporte en outre un lecteur biométrique **27** pour la lecture des empreintes digitales. La tablette **22** comporte en outre une caméra **96** ainsi que deux lampes **98,** de type flash, disposées de part et d'autre de la caméra, ceci afin de faciliter la prise de vue.

Dans le premier mode de réalisation, la tablette **22** comporte un module de communication sans fil **100,** par exemple un émetteur wifi ou Bluetooth qui permet de communiquer avec l'ordinateur **44** disposé dans la borne, cet ordinateur étant quant à lui relié au réseau **600.**

Sur la figure **12****,** on a illustré un deuxième mode de la tablette **22** selon l'invention. Ce deuxième mode de réalisation se distingue du premier mode essentiellement par le fait qu'elle comprend une troisième poignée de préhension **95** disposée en partie supérieure de la tablette, au-dessus de l'écran **24,** tandis que le lecteur MRZ **26**b est disposé entre la poignée gauche **92** et l'écran **24.**

Comme évoqué précédemment, la tablette **22** selon le deuxième mode de réalisation de la figure **12** est reliée à la borne par l'élément longiligne **50,** contrairement à la tablette selon le premier mode de réalisation qui est sans fil.

Sans sortir du cadre de la présente invention, la tablette **22** du premier mode de réalisation pourrait être reliée à la borne par un fil, tandis que la tablette **22** du deuxième mode de réalisation pourrait être munie d'un dispositif de communication sans fil.

## Revendications

1. Installation (10) d'acquisition et de contrôle de données documentaires à bord d'un véhicule (V), ladite installation (10) comprenant :
un dispositif (12) de signalisation d'autorisation de passage du véhicule ;
un dispositif (20) d'acquisition et de communication, qui comprend au moins :
une tablette (22) comportant au moins un écran (24) et un module de lecture d'informations documentaires (26),
un module de transmission de données (28) connecté au moins au module de lecture (26) pour transmettre des données à un serveur distant (500),
un module de réception de données (30) pour recevoir des données en provenance du serveur distant (500),
un module de commande (32) pour commander l'actionnement du dispositif (12) de signalisation d'autorisation de passage du véhicule ; et
une borne (40) fixée au sol (S) et comportant au moins un logement (42) pour recevoir la tablette (22), dans laquelle la borne (40) comporte en outre un capteur de présence (52) pour détecter la présence de la tablette dans le logement (42), la borne comportant en outre un ordinateur (44) agencé pour piloter l'actionnement du dispositif (14) de signalisation d'autorisation du passage du véhicule, ledit ordinateur communiquant avec le module de commande (32), dans laquelle le capteur de présence (52) est relié à l'ordinateur (44), et dans laquelle ledit ordinateur est configuré pour interdire l'actionnement du dispositif de signalisation d'autorisation du passage du véhicule si la présence de la tablette (22) dans le logement (42) n'est pas détectée par le capteur de présence (52).

2. Installation selon la revendication 1, dans laquelle la tablette (22) est reliée à la borne (40) par au moins un élément longiligne (50).

3. Installation selon la revendication 1 ou 2, dans laquelle l'élément longiligne (50) comprend au moins un élément pris parmi un câble de transfert de données relié au moins au module de transmission de données (28), un câble antivol, un câble électrique pour alimenter la tablette.

4. Installation selon l'une quelconque des revendications 1 à 3, dans laquelle la borne (40) comporte en outre un module de recharge (49), disposé dans le logement, pour recharger une batterie (23) de la tablette (22).

5. Installation selon l'une quelconque des revendications précédentes, dans laquelle la borne (40) comporte en outre un volet mobile (74) pour obturer le logement.

6. Installation selon l'une quelconque des revendications précédentes, **caractérisé en ce qu'**elle comporte en outre un dispositif de désinfection (70) de la tablette (22).

7. Installation selon la revendication 6, dans laquelle le dispositif de désinfection (70) est disposé dans la borne (40).

8. Installation selon la revendication 6 ou 7, dans laquelle le dispositif de désinfection (70) comporte au moins une lampe UV (82), de préférence de type cathode froide.

9. Installation selon l'une quelconque des revendications précédentes, dans laquelle le module de lecture (26) de données documentaires comporte un ou plusieurs éléments pris parmi un lecteur RFID (26a), un lecteur de code-barres et un lecteur MRZ (26b).

10. Installation selon l'une quelconque des revendications précédentes, dans laquelle la tablette comporte en outre au moins une poignée de préhension, de préférence deux poignées de préhension (92, 94) disposées latéralement de part et d'autre de l'écran.

11. Installation selon l'une quelconque des revendications précédentes, dans laquelle le module de transmission de données (28) est logé dans la tablette.

12. Installation selon l'une quelconque des revendications précédentes, dans laquelle le dispositif de signalisation d'autorisation de passage comporte une barrière (14), tandis que le module de commande est configuré pour commander l'ouverture de la barrière.

## Patentansprüche

1. Anlage (10) zur Erfassung und Kontrolle von Dokumentendaten an Bord eines Fahrzeugs (V), wobei die Anlage (10) umfasst:
eine Vorrichtung (12) zur Signalisierung der Durchfahrtsgenehmigung des Fahrzeugs;
eine Erfassungs- und Kommunikationsvorrichtung (20), die mindestens umfasst:
ein Tablet (22) mit mindestens einem Bildschirm (24) und einem Dokumentendaten-Lesemodul (26),
ein Datenübertragungsmodul (28), das mindestens mit dem Lesemodul (26) verbunden ist, um Daten an einen entfernten Server (500) zu übertragen,
ein Datenempfangsmodul (30), um Daten von dem entfernten Server (500) zu empfangen,
ein Steuermodul (32), um die Betätigung der Vorrichtung (12) zur Signalisierung der Durchfahrtsgenehmigung des Fahrzeugs zu steuern; und
einen Poller (40), der am Boden (S) befestigt ist und mindestens eine Aufnahme (42) zum Empfang des Tablets (22) aufweist, wobei der Poller (40) ferner einen Anwesenheitssensor (52) zum Erfassen der Anwesenheit des Tablets in der Aufnahme (42) aufweist, wobei der Poller ferner einen Rechner (44) umfasst, der eingerichtet ist, um die Betätigung der Vorrichtung (14) zur Signalisierung der Durchfahrtsgenehmigung des Fahrzeugs zu steuern, wobei der Rechner mit dem Steuermodul (32) kommuniziert, wobei der Anwesenheitssensor (52) mit dem Rechner (44) verbunden ist, und wobei der Rechner ausgelegt ist, um die Betätigung der Vorrichtung zur Signalisierung der Durchfahrtsgenehmigung des Fahrzeugs zu untersagen, wenn die Anwesenheit des Tablets (22) in der Aufnahme (42) von dem Anwesenheitssensor (52) nicht erfasst wird.

2. Anlage nach Anspruch 1, wobei das Tablet (22) über mindestens ein längliches Element (50) mit dem Poller (40) verbunden ist.

3. Anlage nach Anspruch 1 oder 2, wobei das längliche Element (50) mindestens ein Element von einem Datenübertragungskabel, das mindestens mit dem Datenübertragungsmodul (28) verbunden ist, einem Diebstahlsicherungskabel und einem Stromkabel zur Stromversorgung des Tablets umfasst.

4. Anlage nach einem der Ansprüche 1 bis 3, wobei der Poller (40) ferner ein in der Aufnahme angeordnetes Lademodul (49) zum Aufladen eines Akkus (23) des Tablets (22) aufweist.

5. Anlage nach einem der vorhergehenden Ansprüche, wobei der Poller (40) ferner eine bewegliche Klappe (74) zum Verschließen der Aufnahme aufweist.

6. Anlage nach einem der vorhergehenden Ansprüche, **dadurch gekennzeichnet, dass** sie ferner eine Desinfektionsvorrichtung (70) für das Tablet (22) aufweist.

7. Anlage nach Anspruch 6, wobei die Desinfektionsvorrichtung (70) in dem Poller (40) angeordnet ist.

8. Anlage nach Anspruch 6 oder 7, wobei die Desinfektionsvorrichtung (70) mindestens eine UV-Lampe (82), vorzugsweise vom Typ Kaltkathode, aufweist.

9. Anlage nach einem der vorhergehenden Ansprüche, wobei das Dokumentendaten-Lesemodul (26) ein oder mehrere Elemente von einem RFID-Lesegerät (26a), einem Barcode-Lesegerät und einem MRZ-Lesegerät (26b) aufweist.

10. Anlage nach einem der vorhergehenden Ansprüche, wobei das Tablet ferner mindestens einen Griff, vorzugsweise zwei Griffe (92, 94), aufweist, die seitlich auf beiden Seiten des Bildschirms angeordnet sind.

11. Anlage nach einem der vorhergehenden Ansprüche, wobei das Datenübertragungsmodul (28) im Tablet untergebracht ist.

12. Anlage nach einem der vorhergehenden Ansprüche, wobei die Vorrichtung zur Signalisierung der Durchfahrtsgenehmigung eine Schranke (14) aufweist, während das Steuermodul ausgelegt ist, um das Öffnen der Schranke zu steuern.

## Claims

1. An installation (10) for acquiring and controlling documentary data on board a vehicle (V), said installation (10) comprising:
a vehicle passage authorization signaling device (12);
an acquisition and communication device (20), which comprises at least:
a tablet (22) comprising at least one screen (24) and a documentary information reading module (26),
a data transmission module (28) connected at least to the reading module (26) to transmit data to a remote server (500),
a data reception module (30) for receiving data from the remote server (500),
a control module (32) for controlling the actuation of the vehicle passage authorization signaling device (12); and
a terminal (40) fixed to the ground (S) and comprising at least one housing (42) to receive the tablet (22), wherein the terminal (40) further comprises a presence sensor (52) to detect the presence of the tablet in the housing (42), the terminal further comprising a computer (44) arranged to control the actuation of the vehicle passage authorization signaling device (14), said computer communicating with the control module (32), wherein the presence sensor (52) is connected to the computer (44), and wherein said computer is configured to prohibit the actuation of the vehicle passage authorization signaling device if the presence of the tablet (22) in the housing (42) is not detected by the presence sensor (52).

2. The installation according to claim 1, wherein the tablet (22) is connected to the terminal (40) by at least one elongated element (50).

3. The installation according to claim 1 or 2, wherein the elongated element (50) comprises at least one element chosen from among a data transfer cable connected at least to the data transmission module (28), an anti-theft cable, an electric cable to power the tablet.

4. The installation according to any one of claims 1 to 3, wherein the terminal (40) further comprises a recharging module (49), placed in the housing, to recharge a battery (23) of the tablet (22).

5. The installation according to any one of the preceding claims, wherein the terminal (40) further comprises a movable flap (74) to close off the housing.

6. The installation according to any one of the preceding claims, **characterized in that** it further comprises a device (70) for disinfection of the tablet (22).

7. The installation according to claim 6, wherein the disinfection device (70) is arranged in the terminal (40).

8. The installation according to claim 6 or 7, wherein the disinfection device (70) comprises at least one UV lamp (82), preferably of the cold cathode type.

9. The installation according to any one of the preceding claims, wherein the documentary data reading module (26) comprises one or more elements taken from an RFID reader (26a), a barcode reader and an MRZ reader (26b).

10. The installation according to any one of the preceding claims, wherein the tablet further comprises at least one gripping handle, preferably two gripping handles (92, 94) arranged laterally on either side of the screen.

11. The installation according to any one of the preceding claims, wherein the data transmission module (28) is housed in the tablet.

12. The installation according to any one of the preceding claims, wherein the passage authorization signaling device comprises a barrier (14), while the control module is configured to control the opening of the barrier.
